# EUROPÄISCHE PATENTSCHRIFT

(11) **EP 1 477 668 B1**
(45) Veröffentlichungstag und Bekanntmachung des Hinweises auf die Patenterteilung: **13.04.2016**
(21) Anmeldenummer: 04016488.1
(22) Anmeldetag: 12.09.2002
(51) Int. Cl.: F03D 80/00, F03D 13/20, F03D 1/00

(54) **Windenergieanlage und Verfahren zur Errichtung einer Windenergieanlage**
Wind power plant and method for the construction of a wind power plant
Éolienne et méthode pour la construction d'une éolienne

(30) Priorität: 14.09.2001 DE 10145414
(43) Veröffentlichungstag der Anmeldung: 17.11.2004
(62) Teilanmeldung aus: 02777070.0
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- EP-A- 0 675 246
- DE-A- 3 732 670
- DE-A- 19 816 483
- DE-U- 9 417 738
- DE-U- 29 518 899
- US-B1- 6 173 537
- ORLHAC M: "LE POSTE SOCLE DANS LA MISE EN SOUTERRAIN DES RESEAUX RURAUX" REVUE GENERALE DE L'ELECTRICITE, RGE. PARIS, FR, Nr. 4, 1. April 1993 (1993-04-01), Seiten 23-25, XP000355859 ISSN: 0035-3116
- PATENT ABSTRACTS OF JAPAN Bd. 1995, Nr. 08, 29. September 1995 (1995-09-29) & JP 07 122438 A (TOHOKU DENKI SEIZO KK), 12. Mai 1995 (1995-05-12)

## Beschreibung

Die Erfindung betrifft ein Verfahren zur Errichtung einer Windenergieanlage sowie die Windenergieanlage in ihrer Ausgestaltung selbst.

Bisher wird bei der Errichtung von Windenergieanlagen zunächst ein Fundament erstellt, dann der Turm der Windenergieanlage errichtet und anschließend das Maschinenhaus an der Turmspitze ausgerüstet und der Rotor mit den Rotorblättern angebracht. Hiernach werden die elektrischen Leistungsmodule wie der Transformator, Schaltschränke, gegebenenfalls Wechselrichter, Mittelspannungsanlage, Niederspannungsverteilung usw. installiert. Dies geschieht fast immer in einem eigenen kleinen Gebäude außerhalb der Windenergieanlage.

In DE 198 16 483.1 ist bereits auch schon vorgeschlagen worden, den Transformator innen im Turm unterzubringen, so dass es der Errichtung eines eigenen Trafogebäudes mit eigenem Fundament nicht mehr bedarf. Aus der DK 9700453 U3 ist ebenfalls eine Windenergieanlage bekannt, bei der sich ein Transformatormodul innerhalb des Turms befindet. Aus DK 2000 00086 U3 ist eine Windenergieanlage bekannt, bei welcher das Leistungsmodul der Windenergieanlage innerhalb des Turms auf dem Fundament der Windenergieanlage angeordnet ist. Aus Dokument "Middelgrunden Offshore The project", 1. Juli 2001, Seiten 1 bis 14, ist ein Konzept zur Errichtung einer Offshore-Windenergieanlage bekannt, bei welcher ein vorgefertigtes Fundament am Ort der Errichtung der Windenergieanlage auf den Meeresboden herabgelassen wird. In dem vorgefertigten Fundament sind Leerrohre zur Aufnahme von Kabeln angeordnet.

Aus Mads Eskesen, Hans Christian Sørensen et al. "Middelgrunden - Danmarks Smukkeste Havmöllepark - The Beauty In The Wind", April 2001, SPOK ApS, Deckblatt, Seiten 1 bis 31 und 55 bis 60, ist ebenfalls die Errichtung von Offshore-Windenergieanlagen beschrieben, wobei ein Transformator im Turm der Windenergieanlage vor einer Turmebene oberhalb der Fundamentebene errichtet wird und in dem Fundament sind die aus dem vorgenannten Stand der Technik bekannten Leerrohre angeordnet.

Aufgabe der Erfindung ist es nun, ein Verfahren zu entwickeln, mittels dem die Errichtung von Windenergieanlagen noch günstiger, vor allem aber auch schneller vorgenommen werden kann.

Die Aufgabe wird mit einem Verfahren mit den Merkmalen nach Anspruch 1 und einer Windenergieanlage mit den Merkmalen nach Anspruch 2 gelöst. Vorteilhafte Weiterbildungen sind in den Unteransprüchen beschrieben.

Erfindungsgemäß wird vorgeschlagen, abweichend von der bisherigen Konstruktion von Windenergieanlagen, nach Errichtung des Fundaments der Windenergieanlage die wesentlichen Leistungsmodule, also Trafo, Schaltschränke usw. auf dem Fundament zu platzieren und erst danach den Turm zu errichten, so dass die gesamten Leistungsmodule nach Errichtung des Turms im Bereich des Turmfundamentes bzw. im unteren Teil des Turms geschützt sind und sicher auf dem Turmfundament ruhen.

Die Leistungsmodule sind soweit wie möglich bereits vorgefertigt und auf Trägern montiert, so dass durch einen Kran, den man ohnehin zur Errichtung einer Windenergieanlage benötigt, die Leistungsmodule auf dem Turmfundament aufgestellt werden können und die gesamte Betriebsfertigung, insbesondere das Verlegen von Kabeln sowie die gesamte Betriebsvorbereitung der Windenergieanlage durch Einstellung einzelner Steuerungsmodule, Einrüstung der Schaltschränke etc. in einem geschützten Raum stattfinden kann und mit diesen Tätigkeiten begonnen werden kann, nachdem der Turm errichtet wurde.

Besonders vorteilhaft ist es auch, wenn die Träger der Leistungsmodule Stützfüße aufweisen, die wiederum auf vorpositionierten Platten auf dem Turmfundament ruhen. Diese Platten werden bereits bei der Erstellung des Fundaments vor bestimmten Positionen eingelassen und mit dem Fundament fixiert, so dass auch eine spätere Aufstellung der Leistungsmodule auf sehr einfache Art und Weise vorgenommen werden kann.

Schließlich ist es auch sehr vorteilhaft, wenn für die Kabel, die aus der Windenergieanlage herausführen, also insbesondere die Stromübertragungskabel, Steuerungskabel etc. Leerrohrtraversen im Fundament der Windenergieanlage vorgesehen sind und diese Leerrohrtraversen in vorbestimmten Positionen fixiert liegen. Hierzu werden die Traversen mittels Haltearmen, die ihrerseits wiederum in Teilen des Fundaments oder in der untersitzenden Sektion eines Turmes fixiert sind, gehalten. Durch diese Leerrohrtraversen kann der Bereich der Kabelzuführung exakt vorbestimmt werden und vor allem auch so gelegt werden, dass die Kabel, die aus dem Leistungsmodul in das Fundament reichen, über einen kürzesten und optimalen Kabelweg verfügen.

Die erfindungsgemäßen Maßnahmen erleichtern also auch die gesamte elektrische Einrichtung der Windenergieanlage durch eine Vorfertigung von einzelnen Modulen wie den Leerrohrtraversen, Leistungsmodulträgern etc. bereits bei der Fundamenterrichtung.

Mit den erfindungsgemäßen Maßnahmen lässt sich die gesamte Errichtungszeit der Windenergieanlage deutlich verkürzen. Auch lassen sich mit der Erfindung die Kosten für die gesamte Errichtung der Windenergieanlage verringern, ohne dass irgendwelche technischen Nachteile in Kauf genommen werden müssen.

Die Erfindung wird nachfolgend anhand eines in einer Zeichnung ausgeführten Beispiels näher erläutert.

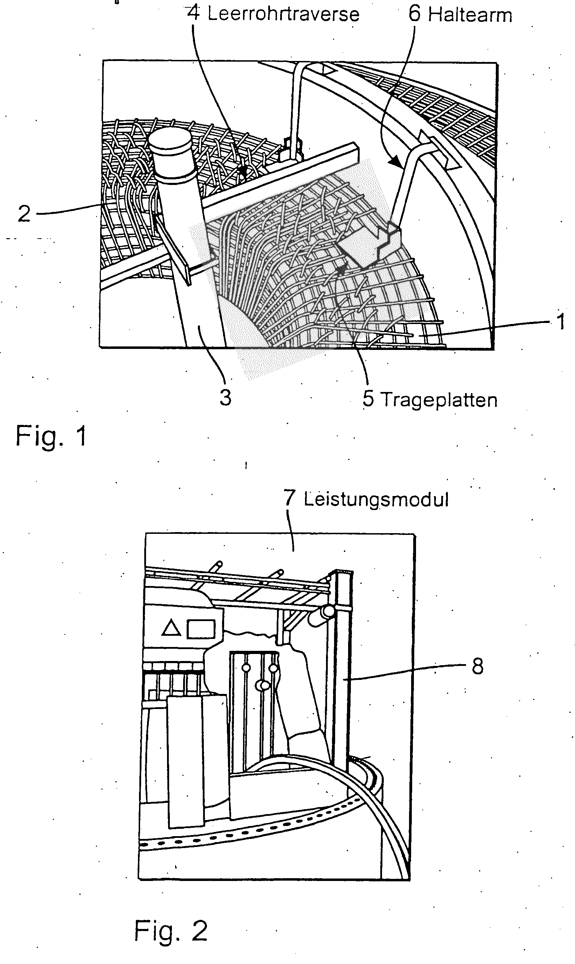

Figur 1 zeigt eine Aufsicht auf ein voreingerichtetes Fundament (ohne Betonfüllung) mit einer Stahlarmierung 1 und 2, an einem Leerrohr 3, welches über eine Verstrebung 4 mit einer an die Armierung angrenzende unterste Turmsektion gehalten wird. Ferner sind Tragplatten 5 zu erkennen, die für Haltearme 6 in der untersten Turmsektion, (die später nach der Errichtung der Windenergieanlage nicht mehr zu sehen ist) angebracht sind.

Das Leerrohr 3 dient später zur Aufnahme von Kabeln, beispielsweise der Stromkabel, über die die gesamte elektrische Energie der Windenergieanlage zum Netz über Erdkabel abgeführt wird. Hierzu ist oftmals nicht nur ein einziges Rohr, sondern mehrere Rohre vorgesehen.

Figur 2 zeigt die Fundamentsektion nach Einfüllung des Betons. Hierbei ist zu sehen, dass die Leerrohre in ihrer vorfixierten Position verbleiben und auch die Tragplatten mit einbetoniert sind, wobei beim Betonieren darauf zu achten ist, dass die Tragplatten satt auf dem Konstruktionsbeton aufliegen und so einen flächigen Lastabtrag gewährleisten. Der Beton reicht bis zur Oberkante der Tragplatten und ist sorgfältig an den Plattenrand angearbeitet.

Nach dem Aushärten des Betons wird zur weiteren Errichtung der Windenergieanlage nicht - wie bis dahin üblich - der Turm auf das unterste Fundament für die Turmsektion aufgesetzt, sondern es wird zunächst ein Leistungsmodul 7 auf die Tragplatten 5 gestellt (Figuren 2, 3 und 4).

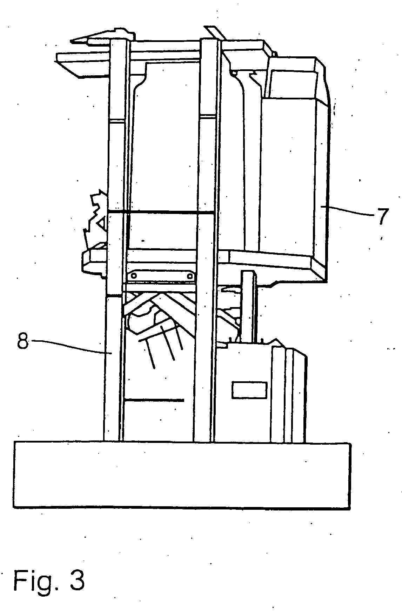

Ein solches Leistungsmodul 7 ist in Figur 3 in einer zweiteiligen Ausführung gezeigt, wobei das Leistungsmodul auch aus weiteren Teilen bestehen kann.

Die beiden Teile des Leistungsmoduls 7 sind im dargestellten Beispiel übereinander gestellt und das gesamte Leistungsmodul besteht aus zwei übereinandergestellten Trägern 8, die ihrerseits wiederum wesentliche Teile der Leistungsmodule aufnehmen, also beispielsweise den Transformator, Wechselrichter, Schaltschränke, Mittelspannungsanlage etc..

Die übereinandergestellten Träger 8 sind nach Art eines Rahmens aufgebaut und passen exakt übereinander, so dass auch eine zuverlässige Befestigung gegeneinander gewährleistet ist.

Die einzelnen Träger weisen unter anderem vier - ein Rechteck aufspannende - vertikal ausgerichtete Holme auf, die untereinander verbunden sind. Diese Holme sind an ihrer Unter- und Oberseite miteinander verschraubt.

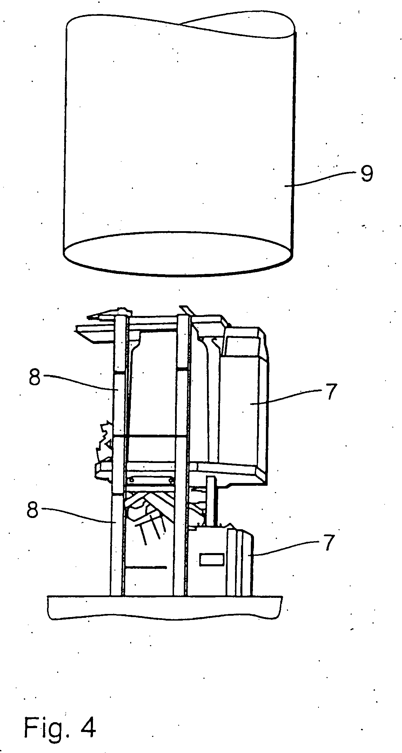

Nach der Aufstellung des elektrischen Leistungsmoduls auf dem Fundament wird der Turm 9 errichtet (Figur 4) und hierbei über das Leistungsmodul gestülpt. Dazu sind die äußeren Abmaße des Leistungsmoduls hinsichtlich Breite und Länge geringer als der Innendurchmesser des Turms im unteren Turmbereich/Fundamentbereich.

Nach Errichtung des Turms wird die Windenergieanlage wie üblich mit dem Maschinenhaus ausgestattet, der Rotor wird montiert und für die Inbetriebnahme werden entsprechende elektrische Verbindungen zwischen dem Generator und dem Leistungsmodul 7 hergestellt und es erfolgt auch der Anschluss des Leistungsmoduls (Ausgang des Transformators) an das Stromversorgungsnetz.

Wenn die vorbeschriebenen Leerrohre bzw. für die Kabeldurchführung vorgesehenen Einrichtungen in bestimmter vorbeschriebener Position vorfixiert sind, kann auch die Verbindung zwischen dem Leistungsmodul und dem Netz äußerst schnell und günstig hergestellt werden, wobei die Kabellängen insgesamt minimal sind, weil die Leerrohre dort positioniert sind, wo sie genau zur Anlage mit den entsprechenden Teilen des Leistungsmoduls kommen.

Bei der erfindungsgemäßen Windenergieanlage ist es auch vorteilhaft, wenn der Zugang der Windenergieanlage nicht mehr unbedingt im festen Fundamentbereich durch eine übliche Tür erfolgt, sondern durch eine Tür (Zugang), die so positioniert ist, dass sie in den Bereich oberhalb der Hoch- oder Mittelspannung führenden Teile des Leistungsmoduls mündet. Hierzu kann an der Außenseite des Turms eine entsprechende Leiter oder Treppe vorgesehen sein. Diese Positionierung der Zugangstür hat den Vorteil, dass das Personal, welches die Anlage häufiger betreten muss, sich nicht stets an den Hoch- oder Mittelspannung führenden Teilen des Leistungsmoduls vorbei bewegen muss, während die Anlage in Betrieb ist. Damit wird auch sichergestellt, dass nicht unvorhergesehenerweise oder aus Versehen während des Betriebs der Windenergieanlage jemand sich in unmittelbarer Nähe des Leistungsmoduls befindet und hierbei in Berührung mit spannungs- oder stromgeführten Teilen kommt, was einen großen Unfall verursachen könnte.

Im Bereich der Zugangstür des Turms ist dann eine entsprechende Zwischenplattform vorgesehen, die das Personal, welches den Turm betritt, begehen kann, um dann im Inneren des Turms weiter in die Windenergieanlage hoch zu steigen oder an verschiedenen Steuereinrichtungen Einstellungen vorzunehmen oder auch Messdaten abzulesen.

Bei einer Windenergieanlage des erfindungsgemäßen Typs handelt es sich um eine solche, die regelmäßig über mehr als 100 kW Nennleistung verfügt, vorzugsweise eine Nennleistung im Bereich von 500 kW, 1 MW, 1,5 MW oder deutlich mehr aufweist. Bevorzugt ist die Zwischenplattform mit einer verschließbaren Platte versehen, durch die das Personal in den unteren Bereich des Leistungsmoduls einsteigen kann. Mit dem Verschluss der Klappe ist eine weitere Sicherung des unteren Teils des Leistungsmoduls gegen unbefugten Zugriff gewährleistet.

Der innere Durchmesser des Turms im Fundamentbereich kann dabei mehrere Meter betragen, so dass auch die gesamte Fläche dort z.B. 100 m² oder mehr beträgt und daher auch eine ausreichend große Fläche zur Aufnahme der Leistungsmodule zur Verfügung steht. Soweit in dieser Anmeldung der Begriff "Leistungsmodul" verwendet wird, so ist damit der Mittel- bzw. Hochspannungsführende Teil der Windenergieanlage gemeint. Dies sind insbesondere die Aggregate wie Transformator oder Wechselrichter oder Notschalter sowie der Mittelspannungsschaltschrank oder auch die Niederspannungsverteiler.

## Patentansprüche

1. Verfahren zur Errichtung einer Windenergieanlage mit einem Turm (9), der auf einem Fundament gründet sowie einem elektrischen Leistungsmodul (7), im wesentlichen bestehend aus einem Transformator und gegebenenfalls einem Wechselrichter oder anderen elektrischen Einrichtungen, wie z.B. Schaltschränken, die zur Steuerung der Windenergieanlage und/oder zur Durchleitung der elektrischen Leistung, die vom Generator der Windenergieanlage zur Verfügung gestellt und in ein Netz eingespeist wird, vorgesehen ist, wobei das Leistungsmodul (7) vor Errichtung des Turms auf dem Turmfundament gelagert wird, und wobei im Fundament der Windenergieanlage Leerrohre (3) zur Aufnahme von Kabeln angeordnet sind und die Leerrohre vor der Erstellung des Fundaments mit Traversen fixiert sind.

2. Windenergieanlage bestehend aus einem Turm, welcher auf einem Fundament gründet und einem Leistungsmodul, wobei das Leistungsmodul wenigstens einen Transformator aufweist, mittels dem die elektrische Energie, die vom Generator der Windenergieanlage zur Verfügung gestellt wird, auf eine mittlere und/oder Hochspannung transformiert wird, dass das Leistungsmodul darüber hinaus weitere Einheiten enthält, mittels denen die elektrische Energie, die vom Generator der Windenergieanlage bereitgestellt wird, gesteuert und/oder geleitet wird, und/oder aufgewertet wird, wobei das Leistungsmodul einen Träger aufweist, der auf dem Fundament der Windenergieanlage aufgesetzt ist und dass der Träger die elektrischen Einrichtungen des Leistungsmoduls, wie z.B. der Transformator aufnimmt, und wobei Breite und/oder Länge des Leistungsmoduls geringer sind als der Durchmesser des Turms der Windenergieanlage im Fundamentbereich, **dadurch gekennzeichnet, dass** im Fundament der Windenergieanlage Leerrohre (3) zur Aufnahme von Kabeln in einer vorfixierten Position angeordnet sind und die Leerrohre vor der Erstellung des Fundaments mit Traversen fixiert sind.

3. Windenergieanlage nach Anspruch 2,
**dadurch gekennzeichnet, dass** das Leistungsmodul zweiteilig ausgebildet ist, wobei die beiden Teile aufeinander gestellt sind und die Träger im Übergangsbereich zwischen dem ersten und zweiten Teil so ausgebildet sind, dass sie aufeinander passen und gegen einander befestigt sind.

4. Windenergieanlage nach einem der Ansprüche 2 oder 3,
**dadurch gekennzeichnet, dass** das Leistungsmodul aus einem Transformator und einem Wechselrichter und wenigstens einem Schaltschrank zur Aufnahme von elektrischen Steuerungseinrichtungen der Windenergieanlagen besteht.

## Claims

1. A method for construction of a wind energy plant having a tower (9) which is based on a foundation and also an electrical power module (7) essentially consisting of a transformer and optionally an inverter or other electrical devices, such as switchgear cabinets, which is intended for controlling the wind energy plant and/or for passing on the electrical power which is provided by the generator of the wind energy plant and is fed into a grid system, wherein the power module (7) is mounted on the tower foundation before the construction of the tower, and wherein empty conduits (3) for accommodating cables are arranged in the foundation of the wind energy plant, and the empty conduits are fixed with cross-members before the finishing of the foundation.

2. A wind energy plant consisting of a tower which is based on a foundation, and a power module, with the power module having at least one transformer by means of which the electrical power which is provided by the generator of the wind energy plant is transformed to a medium and/or high voltage, in that [sic] the power module furthermore contains further units by means of which the electrical power which is provided by the generator of the wind energy plant is controlled and/or passed on, and/or is upgraded, wherein the power module has a support which is placed on the foundation of the wind energy plant, and in that [sic] the support accommodates the electrical devices of the power module, such as the transformer, and wherein the width and/or the length of the power module are/is less than the diameter of the tower of the wind energy plant in the foundation area, **characterised in that** empty conduits (3) for accommodating cables are arranged in the foundation of the wind energy plant in a pre-fixed position, and the empty conduits are fixed with cross-members before the finishing of the foundation.

3. A wind energy plant according to Claim 2, **characterised in that** the power module is formed in two parts, with the two parts being placed one on top of the other, and the supports being designed in the transitional area between the first part and the second part such that they match one another and are attached to one another.

4. A wind energy plant according to one of Claims 2 or 3, **characterised in that** the power module consists of a transformer and an inverter and at least one switchgear cabinet for accommodating electrical control devices of the wind energy plants.

## Revendications

1. Procédé de construction d'une éolienne comprenant une tour (9), qui repose sur des fondations, comprenant également un module de puissance (7) électrique, constitué essentiellement d'un transformateur, et le cas échéant, d'un onduleur ou d'autres équipements électriques, tels que des armoires électriques, qui sont prévus afin de commander l'éolienne et/ou afin d'acheminer la puissance électrique, qui est fournie par le générateur de l'éolienne et qui est injectée dans un réseau, sachant que le module de puissance (7) est monté, avant que la tour ne soit construite, sur les fondations de la tour et sachant que des tubes vides (3) servant à recevoir des câbles sont disposés dans les fondations de l'éolienne et que les tubes vides sont fixés à l'aide de traverses avant l'élaboration des fondations.

2. Eolienne constituée d'une tour, qui repose sur des fondations, et d'un module de puissance, sachant que le module de puissance présente au moins un transformateur, au moyen duquel l'énergie électrique, qui est fournie par le générateur de l'éolienne, est transformée en une tension moyenne et/ou élevée, sachant que le module de puissance contient par ailleurs des unités supplémentaires, au moyen desquelles l'énergie électrique, qui est fournie par le générateur de l'éolienne, est commandée et/ou guidée et/ou valorisée, sachant que le module de puissance présente un support, qui est placé sur les fondations de l'éolienne, et sachant que le support reçoit les équipements électriques du module de puissance, tels que le transformateur, et sachant que la largeur et/ou la longueur du module de puissance sont inférieures au diamètre de la tour de l'éolienne dans la zone des fondations, **caractérisée en ce que**, dans les fondations de l'éolienne, des tubes vides (3) servant à recevoir des câbles sont disposés dans une position préalablement fixée, et **en ce que** les tubes vides sont fixés avec des traverses avant l'élaboration des fondations.

3. Eolienne selon la revendication 2,
**caractérisée en ce que** le module de puissance est réalisé en deux parties, sachant que les deux parties sont placées l'une sur l'autre et que les supports sont réalisés dans la zone de transition entre la première et la deuxième partie de sorte qu'ils s'adaptent les uns aux autres et qu'ils sont fixés les uns contre les autres.

4. Eolienne selon l'une quelconque des revendications 2 et 3,
**caractérisée en ce que** le module de puissance est constitué d'un transformateur et d'un onduleur et d'au moins une armoire électrique servant à recevoir des équipements de commande électriques des éoliennes.
